# EUROPEAN PATENT SPECIFICATION

(11) **EP 4 254 117 B1**
(45) Date of publication and mention of the grant of the patent: **27.08.2025**
(21) Application number: 21881346.7
(22) Date of filing: 24.11.2021
(51) Int. Cl.: G05D 1/661, G05D 1/244, G05D 1/43, G05D 1/00, B60L 53/35, G05D 111/40

(54) **SELF-MOVING ROBOT CHARGING SYSTEMS AND SELF-MOVING ROBOT CHARGING METHOD**
SELBSTBEWEGUNGSROBOTER-LADESYSTEME UND SELBSTBEWEGUNGSROBOTER-LADEVERFAHREN
SYSTÈMES DE CHARGE DE ROBOT AUTOMOTEUR ET PROCÉDÉ DE CHARGE DE ROBOT AUTOMOTEUR

(30) Priority: 24.11.2020 CN 202011330014
(43) Date of publication of application: 04.10.2023
(73) Proprietor: Suzhou Cleva Precision Machinery & Technology Co., Ltd., Suzhou, Jiangsu 215000 (CN); Skybest Electric Appliance (Suzhou) Co., Ltd., Suzhou, Jiangsu 215000 (CN)
(72) Inventor: ZHU, Shaoming, Suzhou, Jiangsu 215000 (CN); REN, Xue, Suzhou, Jiangsu 215000 (CN)
(74) Representative: Murgitroyd & Company
(86) International application number: PCT/CN2021/132774
(87) International publication number: WO 2022/111522

(56) References cited:
- WO-A1-2019/153133
- WO-A1-2020/100263
- CN-A- 102 738 862
- CN-A- 106 300 578
- CN-A- 109 765 899
- CN-A- 111 465 315
- KR-A- 20040 086 939
- US-A1- 2014 379 196
- US-A1- 2019 369 639

## Description

### FIELD OF THE INVENTION

The invention relates to the field of intelligent control, in particular to a self-moving robot charging system and a self-moving robot charging method.

### BACKGROUND

With the continuous development of science and technology, various automatic working equipment has begun to slowly enter people's lives, such as lawn mowers. This kind of automatic working equipment has a walking device, a working device and an automatic control device, so that the automatic working equipment can be independent from people's operation, automatically walk and perform work within a certain range, and when the energy of the energy storage device of the automatic working equipment is insufficient, it can automatically return to the charging station unit to recharge and then keep working.

The charging system of the robot in the prior art is to first build a charging station guideline around the entire working region, the charging station guideline is connected to the charging station, and the robot walks along the charging station guideline to find the charging station for docking and charging. The whole process is time-consuming and labor-intensive. The charging station guideline laid along the entire working region will make the robot find the charging station guideline without the principle of proximity, and the robot needs to move along the boundary of the entire working region after finding the boundary line of the charging station. In this way, the process of finding the charging station for the robot is cumbersome and long, and the power consumption of the robot is increased. Moreover, using this method to set the boundary line, the charging station can only be set in some fixed positions. WO2019/153133A1, WO2020/100263A1 and US2019/369639A1 all disclose examples of self-moving robot and charging systems which require the robot to move along a boundary line into proximity with the charging station before being guided by other electromagnetic signals from other lines near the charging station into a docking position.

### SUMMARY OF THE INVENTION

The purpose of the present invention is to provide a self-moving robot charging system and a self-moving robot charging method.

A self-moving robot charging system comprises a self-moving robot and a charging station set in a working region or at the edge of the working region (with one side of the charging station in contact with the boundary of the working region) of the self-moving robot, and the self-moving robot is provided with a charging connection structure matching the charging station, and at least two detection sensors, characterized in that:
the self-moving robotic charging system further comprises a charging station guideline electrically connected to the charging station and forming a closed loop via the electrical connection with the charging station, the closed loop defining a first region, the first region is located in the working region and is smaller than the working region and at least partially surrounds charging station; wherein the charging station guideline comprises an outer contour section and two connecting sections, wherein the outer contour section is in the shape of a continuous line segment with an opening, and the outer contour section at least surrounds a side of the charging station that is exposed to the working region (and is not in contact with the boundary of the working region), and two end points of the outer contour section are respectively connected to the charging station through one of the connecting sections, and the outer contour section and the connecting sections together surround and define the first region;
the self-moving robot has a width W and further comprises a control module provided with a positioning system, and the control module is at least configured to control the self-moving robot to move toward the direction of the charging station guideline through the positioning system, and the detection sensor is configured to detect and identify the signal sent from the charging station guideline.

Where the charging station is set at the edge of the working region, at least one of the detection sensors is arranged on one side of a central axis of the self-moving robot in the width direction, and at least another one of the detection sensors is symmetrically arranged on the opposite side of the central axis, and a distance between the detection sensors symmetrically arranged on either side is M.

Where the charging station is set in the working region, the charging station is not in contact with the boundary of the working region, and the outer contour section surrounds all sides of the charging station; and a distance between the two ends of the outer contour section is Y, 1/2M<Y<M, and the distance between the connecting sections is greater than 1/2M.

As a further improvement of the present invention, the charging station may be provided with a charging interface on at least one side thereof, and at least one of the connecting sections may be connected to the side of the charging station provided with the charging interface to form a guiding section, the length of the self-moving robot is L, and the length of the guiding section is not less than L.

As a further improvement of the present invention, the charging station may be provided with the charging interface on one side thereof, and the connecting section may be connected to the charging station forms a guiding section, and the detection sensor and the control module are further configured to control the self-moving robot to move in the direction toward the guiding section after the self-moving robot is controlled to contact the charging boundary line.

As a further improvement of the present invention, the length of the guiding section may be 2L, and the distance between the outer contour section and the charging station may be not greater than 2L.

The present invention also provides a charging method for a self-moving robot as part of the self-moving robot charging system as hereinbefore described, comprising the steps of:
drive the self-moving robot to move from the current position to the direction of the charging station;
after the self-moving robot moves to the charging station guideline, the detection sensor detects and identifies the charging station guideline;
the self-moving robot moves along the path of the charging station guideline, and the charging connection structure is aligned and connected to the charging station.

The beneficial effects of the present invention are as follows: the self-moving robot charging system provided by the present invention enables the self-moving robot to find the charging station faster by using the charging station guideline surrounding the charging station and cooperating with the positioning system of the self-moving robot, saving the time to find a charging station and increasing the power usage of the robot, and there are no restrictions on the installation position of the charging station and the starting position of the self-moving robot, which can cover more usage scenarios.

### BRIEF DESCRIPTION OF THE DRAWINGS

Fig. 1 is a schematic diagram of a self-moving robot in an embodiment of the present invention.
Fig. 2 is a schematic diagram of the wiring of the charging station guideline in embodiment 1 of the present invention.
Fig. 3 is a schematic diagram of the wiring of the charging station guideline in embodiment 2 of the present invention.
Fig. 4 is a schematic diagram of the wiring of the charging station guideline in embodiment 3 of the present invention.
Fig. 5 is a schematic diagram of the wiring of the charging station guideline in embodiment 4 of the present invention.

### DETAILED DESCRIPTION OF THE EMBODIMENTS

In order to make the purpose, technical solutions and advantages of the present application clearer, the technical solutions of the present application will be clearly and completely described below in conjunction with the specific embodiments of the present application and the corresponding drawings. Obviously, the described embodiments are only a part of the embodiments of the present application, but not all of the embodiments. Based on the embodiments in the present application, all other embodiments obtained by those of ordinary skill in the art without creative work fall within the protection scope of the present application.

Embodiments of the present invention are described in detail below, examples of which are illustrated in the accompanying drawings, wherein the same or similar reference numerals refer to the same or similar elements or elements having the same or similar functions throughout. The embodiments described below with reference to the accompanying drawings are exemplary, only used to explain the present invention, and should not be construed as a limitation of the present invention.

For the convenience of description, the term is used to describe the relative position in space in the context, such as "upper", "lower", "rear", "front", etc., used to describe the relationship of one element or feature shown in the drawings to another element or feature. The term spatially relative position may comprise different orientations of the device in use or operation other than the orientation shown in the figures. For example, if the device in the figures is turned over, elements described as "below" or "above" other elements or features would then be oriented "below" or "above" the other elements or features. Thus, the exemplary term "below" can encompass both spatial orientations of below and above.

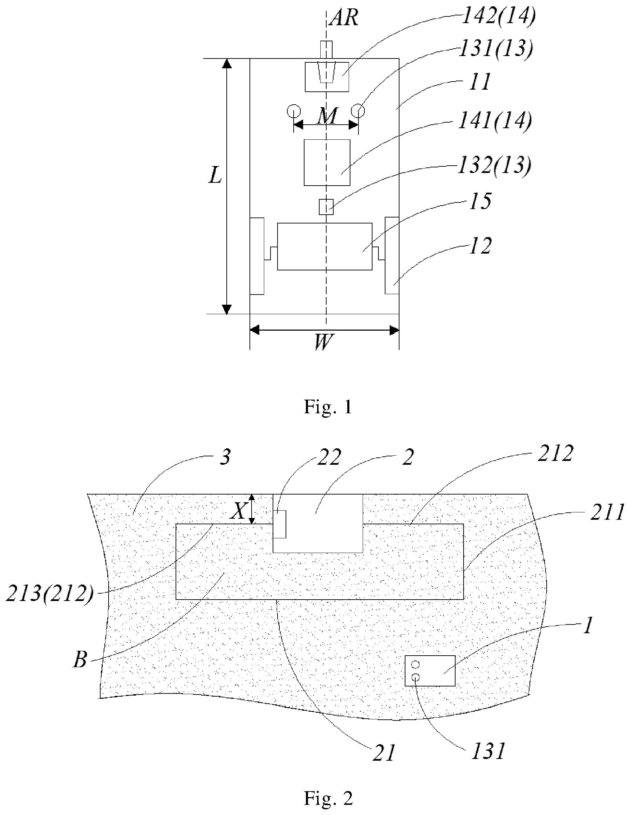

As shown in Fig. 1 and Fig. 2, the present invention provides a charging system for a self-moving robot 1, including a self-moving robot 1 and a charging station 2 arranged in a working region 3.

The self-moving robot 1 may be a lawn mower, or an automatic vacuum cleaner, etc., which automatically walks in the working region 3 for mowing or vacuuming. In the specific example of the present invention, the self-moving robot 1 is a self-moving robot mower 1, correspondingly, the working region 3 can be a lawn. Of course, the self-moving robot 1 is not limited to lawn mowers and vacuum cleaners, but can also be other equipment, such as spraying equipment, snow removal equipment, monitoring equipment and other equipment suitable for unattended operation.

As shown in Fig. 1, in the specific embodiment of the present invention, the self-moving robot 1 has a length of L and a width of W. The self-moving robot 1 comprises: a body 11, a walking module 12 arranged on the body 11, and a boundary detection module 13, an energy module 14 and a control module 15. In addition, the self-moving robot 1 also comprises a work module, which is used to perform specific work tasks of the lawn mower. The work module comprises a mowing blade, a cutting motor, etc., and may also comprise parts that can optimize or adjust the mowing effect like a mowing height adjustment mechanism, etc.

The walking module 12 is used to drive the self-moving robot 1 to walk and turn in the working region 3, and is usually composed of a wheel set installed on the self-moving robot mower and a drive motor that drives the wheel set to travel.

The boundary detection module 13 is used to detect the relative positional relationship between the self-moving robot mower 1 and other objects in the working region 3 such as the charging station 2, and the relative positional relationship may specifically comprise one or more of distance, angle, and orientation inside and outside the boundary line.

The composition and principle of the boundary detection module 13 can be various, such as infrared type, ultrasonic type, collision detection type, magnetic induction type, etc. The installation positions and numbers of sensors and corresponding signal generating devices are also various.

Specifically, in this embodiment, the boundary detection module 13 comprises two detection sensors 131 symmetrically arranged on both sides of the central axis AR of the self-moving robot 1 in the width direction, and the distance between the two detection sensors 131 is M.

In some other embodiments of the present invention, the number and arrangement of the detection sensors 131 can also be adjusted, for example, one detection sensor 131 is arranged on the central axis AR of the self-moving robot 1 in the width direction.

Further, in some embodiments of the present invention, the boundary detection module 13 further comprises a camera 132, which is at least configured to identify and avoid the charging station 2, so that during normal operation, the self-moving robot 1 will not collide with the charging station 2.

The energy module 14 is used to provide energy for various tasks of the self-moving robot 1, and comprises a rechargeable battery 141 and a charging connection structure 142. The charging connection structure 142 is generally a charging electrode sheet that can be exposed outside the lawn-mowing self-moving robot mower 1.

As shown in Fig. 2, the charging station 2 is located in the working region 3 and is connected to the commercial power or other power supply system for the self-moving robot 1 to returning and charging. The charging connection structure 142 of the self-moving robot 1 matches the charging station 2.

The charging system of the self-moving robot 1 further comprises a charging station guideline 21 arranged around the charging station 2. The charging station guideline 21 is arranged in the working region 3, and the charging station guideline 21 is electrically connected with the charging station 2 to form a closed loop. The signal generator in the charging station 2 makes the charging station guideline 21 send out a signal, the detection sensor 131 detects the signal, and the control module 15 adjusts the posture and walking path of the auto-walking robot 1 according to the signal.

Further, the control module 15 also comprises a positioning system (not shown in the figure), the positioning system may be a positioning system such as GPS, UWB or Zigbee, and the control module 15 is at least configured to control the self-moving robot 1 to move toward the charging station guideline 21. The self-moving robot 1 can identify the position of the charging station 2 through the location information of the charging station 2 recorded in the positioning system in advance, or through the position signal transmitter in the charging station 2, etc., and when the control module 15 judges that the self-moving robot 1 needs charging, control the self-moving robot 1 to move toward the charging station 2. The charging station guideline 21 sends a signal. After the self-moving robot 1 moving to the charging boundary line, the self-moving robot 1 moves along the trajectory of the charging station guideline 21 and enters the charging station 2 to connect the charging connection structure 142 to the charging station 2 in alignment.

The closed loop defines a first region B which is located within the working region 3 and at least partially surrounds the charging station 2.

The self-moving robot 1 first moves toward the charging station 2 through the positioning system, and then moves along the charging station guideline 21 laid around the charging station 2 to connect with the charging station 2, so that the self-moving robot 1 can find the charging station 2 more quickly, saving the time required to find the charging station 2 and increasing the power usage of the robot, and there are no restrictions on the installation position of the charging station 2, and no restrictions on the starting position of the self-moving robot 1, which can cover more usage scenarios.

Further, the charging station guideline 21 comprises an outer contour section 211 and two connecting sections 212. The outer contour section 211 is in the shape of a continuous line segment with an opening. The two ends of the outer contour section 211 are respectively connected to the charging station 2 through the connecting section 212, and the outer contour section 211 and the connecting section 212 are surrounded to form a first region B, and the outer contour section 211 at least surrounds the side of the charging station 2 exposed to the working region 3, thereby, it is ensured that the self-moving robot 1 moves toward the charging station 2 from any position in the working region 3, and will first contact the charging station guideline 21, and then move along its trajectory, which improves the accuracy of path finding and selection. The outer contour section and the connecting section are surrounded to form a first region, the region of the first region is smaller than the region of the working region, and the region of the first region B is smaller than the region of the working region 3. On the one hand, the time required for the robot to find the charging station can be reduced; on the other hand, the length of the charging station guideline to be laid can be reduced, thereby reducing the laying cost and the possibility of damage to the charging station guideline 21.

It can be understood that the surrounding mentioned here refers to substantially surrounding. In some embodiments, the outer contour section 211 may have an opening or is partially exposed at a position close to the edge of the working region 3 to meet the movement requirements of the self-moving robot 1, but it does not affect the realization of the technical effect that the outer contour section 211 surrounds the charging station 2 and makes the self-moving robot 1 contact the charging station guideline 21 first.

Further, the distance between the outer contour section 211 and the charging station 2 is X, where X>1/2W. Since the detection sensors 131 are evenly set on both sides of the central axis AR, that is, when the self-moving robot 1 moves on the charging station guideline 21, the center axis AR coincides with the charging station guideline 21, and the distance between the outer contour section 211 and the charging station 2 is limited to be greater than 1/2W, which can prevent the self-moving robot 1 from colliding with the charging station 2 when moving.

In this embodiment, at least one side surface of the charging station 2 is provided with the charging interface 22, and at least one connecting section 212 is connected to the side surface of the charging station 2 provided with the charging interface 22 to form a guiding section 213.

Further, the length of the self-moving robot 1 is L, and the length of the guiding section 213 is not less than L. The self-moving robot 1 adjusts the orientation of the body by moving along the guiding section 213, so that the charging connection structure 142 is connected to the charging interface 22 of the charging station 2 in alignment.

Preferably, the length of the guiding section 213 is 2L to ensure that the orientation of the body can be completely adjusted, so that the self-moving robot 1 can be accurately docked with the charging station 2.

Further, the distance between the outer contour section 211 and the charging station 2 is not greater than 2L, so that while meeting the length requirement of the guiding section 213, the length of the charging station guideline 21 can be reduced as much as possible, and reduce the cost of laying the charging station guideline 21, and reduce the possibility of damage to the charging station guideline 21.

Further, in some embodiments of the present invention, one side of the charging station 2 is provided with a charging interface 22, and the connecting section 212 connected to it forms the guiding section 213, the detection sensor 131 and the control module 15 is further configured to control the self-moving robot 1 to move in the direction toward the guiding section 213 after contacting the charging boundary line, so as to further reduce the time required for the self-moving robot 1 to find the charging station 2.

In other embodiments of the present invention, the charging station 2 is provided with a guiding device such as a magnetic control component. When the self-moving robot 1 is transported along the charging station guideline 21 to the vicinity of the guiding device of the charging station 2, the direction is automatically adjusted, the charging connection structure 142 is docked with the charging station 2. The charging station 2 and the self-moving robot 1 are also charged by the wireless charging device, so as to further reduce the requirement of the self-moving robot 1 on the accuracy of the movement path.

The wiring mode of the charging station guide wire 21 in the specific embodiment of the present invention will be described in detail below.

As shown in Fig. 2, in embodiment 1, the planar shape of the charging station 2 can be approximately regarded as a rectangle, and one side of the charging station 2 is connected to the boundary of the working region 3, and the boundary of the working region 3 is provided with obstacles such as walls or fences.

The outer contour section 211 encloses the side of the charging station 2 that does not adjoin the boundary of the working region 3.

Further, the distance between the two ends of the outer contour section 211 and the boundary of the working region 3 is X, 1/2W<X<1/2(W+M), and the distance between the connecting section 212 and the boundary of the working region 3 is greater than 1/2W. Therefore, when the self-moving robot 1 moves along the boundary of the working region 3 to the charging station guideline 21, it will not rub against obstacles, or directly collide with the charging station 2 without touching the charging station guideline 21.

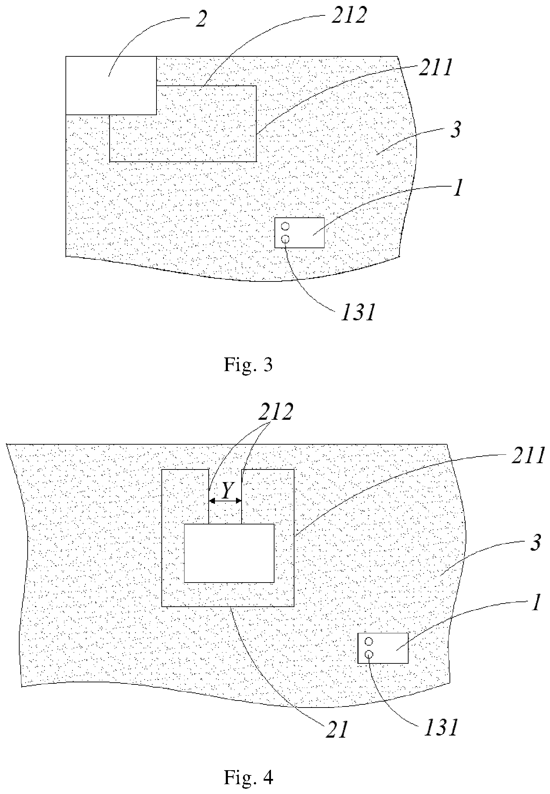

As shown in Fig. 3, in embodiment 2, the planar shape of the charging station 2 can be regarded as a rectangle. When there is an region with an approximate right angle at the corner of the boundary of the working region 3, the charging station 2 is set at the corner of the working region 3, that is, the two sides of the charging station 2 are connected to the boundary of the working region 3, and the boundary of the working region 3 is provided with obstacles such as walls or fences.

The distance limitation between the two ends of the outer contour section 211 and the boundary of the working region 3 is similar to that in embodiment 1. By arranging the charging station 2 at the corner of the working region 3, the length of the laid charging station guideline 21 can be further reduced.

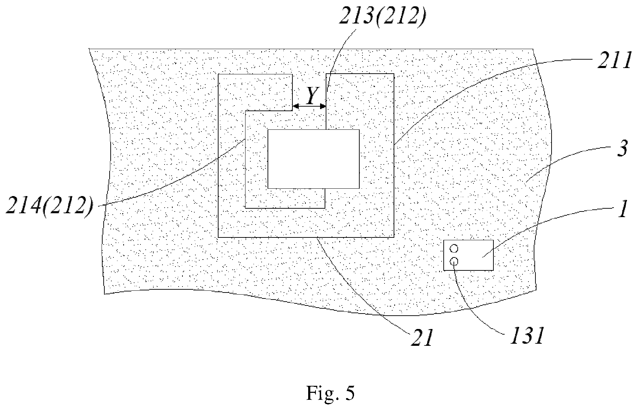

As shown in Fig. 4 and Fig. 5, in embodiment 3, the planar shape of the charging station 2 can be approximately regarded as a rectangle. The charging station 2 is located in the working region 3 and does not contact the boundary of the working region 3. The outer contour section 211 surrounds all sides of charging station 2.

The distance between the two ends of the outer contour section 211 is Y, 1/2M<Y<M, and the distance between the connecting sections 212 is greater than 1/2M, that is, an opening with a length Y is formed on the outer contour section 211. When the outer contour section 211 needs to surround all sides of the charging station 2, an opening with a defined length greater than 1/2M is formed in the outer contour section 211, so as to prevent the self-moving robot 1 from continuing to circulate along the outer contour section 211, meanwhile, its length is controlled within M to ensure that the self-moving robot 1 will not directly enter the charging station guideline 21 from the opening of the outer contour section 211 without contacting it.

According to the difference in the structure, charging method, and charging connection method of the charging station 2, the two connecting sections 212 can be connected to the same side of the charging station 2 at the same time or be connected to two sides respectively.

As shown in Fig. 4, one connecting section 212 is connected to one side of the charging station 2 to form a guiding section 213, and the other connecting section 212 is connected to the opposite side of the charging station 2 to form an inner contour section 214, and the distance between the inner contour section 214 and the outer contour section 211 is greater than 1/2M, so as to avoid the situation of deviating from the path when the self-moving robot 1 moves on the outer contour section 211 and the inner contour section 214.

The present invention also provides a charging method for the self-moving robot 1, comprising the steps of:
drive the self-moving robot 1 to move toward charging station 2;
after the self-moving robot 1 moves to the charging station guideline 21, the detection sensor 131 detects and identifies the charging station guideline 21;
the self-moving robot 1 moves along the path of the charging station guideline 21, and the charging connection structure 142 thereof is connected to the charging station 2 in alignment.

In summary, the self-moving robot charging system provided by the present invention enables the self-moving robot to find the charging station faster by using the charging station guideline surrounding the charging station and cooperating with the positioning system of the self-moving robot, saving the time to find a charging station and increasing the power usage of the robot, and there are no restrictions on the installation position of the charging station and the starting position of the self-moving robot, which can cover more usage scenarios.

## Claims

1. A self-moving robot charging system, comprising a self-moving robot (1) and a charging station (2) set at an edge of a working region (3) of the self-moving robot (1) with one side of the charging station (2) in contact with the boundary of the working region (3), the self-moving robot (1) is provided with a charging connection structure (142) matching the charging station (2), and at least two detection sensors (131), wherein:
the self-moving robotic charging system further comprises a charging station guideline (21) electrically connected to the charging station (2) and forming a closed loop via the electrical connection with the charging station (2), the closed loop defining a first region (B), the first region (B) is located in and is smaller than the working region (3) and at least partially surrounds the charging station (2); wherein the charging station guideline (21) comprises an outer contour section (211) and two connecting sections (212), wherein the outer contour section (211) is in the shape of a continuous line segment with an opening, and the outer contour section (211) at least surrounds a side of the charging station (2) that is exposed to the working region (3) and is not in contact with the boundary of the working region (3), and two end points of the outer contour section (211) are respectively connected to the charging station (2) through one of the connecting sections (212), and the outer contour section (211) and the connecting sections (212) together surround and define the first region (B);
the self-moving robot (1) has a width W and further comprises a control module (15) provided with a positioning system, and the control module (15) is at least configured to control the self-moving robot (1) to move toward the direction of the charging station guideline (21) through the positioning system, and the detection sensors (131) are configured to detect and identify the signal sent from the charging station guideline (21), wherein at least one of the detection sensors (131) is arranged on one side of a central axis (AR) of the self-moving robot (1) in the width direction, and at least another one of the detection sensors (131) is symmetrically arranged on the opposite side of the central axis (AR), and a distance between the detection sensors (131) symmetrically arranged on either side is M;
wherein a distance between the two ends of the outer contour section (211) and the boundary of the working region (3) is X, wherein 1/2W<X<1/2(W+M), and a distance between the connecting section (212) and the boundary of the working region (3) is greater than 1/2W.

2. A self-moving robot charging system, comprising a self-moving robot (1) and a charging station (2) set in a working region (3) of the self-moving robot (1), the self-moving robot (1) is provided with a charging connection structure (142) matching the charging station (2), and at least two detection sensors (131), wherein:
the self-moving robotic charging system further comprises a charging station guideline (21) electrically connected to the charging station (2) and forming a closed loop via the electrical connection with the charging station (2), the closed loop defining a first region (B), the first region (B) is located in the working region (3) and is smaller than the working region (3) and at least partially surrounds the charging station (2); wherein the charging station guideline (21) comprises an outer contour section (211) and two connecting sections (212), wherein the outer contour section (211) is in the shape of a continuous line segment with an opening, and the outer contour section (211) at least surrounds a side of the charging station (2) exposed to the working region, and two end points of the outer contour section (211) are respectively connected to the charging station (2) through one of the connecting sections (212), and the outer contour section (211) and the connecting sections (212) together surround and define the first region (B);
the self-moving robot (1) has a width W and further comprises a control module (15) provided with a positioning system, and the control module (15) is at least configured to control the self-moving robot (1) to move toward the direction of the charging station guideline (21) through the positioning system, and the detection sensors (131) are configured to detect and identify the signal sent from the charging station guideline (21), wherein at least one of the detection sensors (131) is arranged on one side of a central axis (AR) of the self-moving robot (1) in the width direction, and at least another one of the detection sensors (131) is symmetrically arranged on the opposite side of the central axis (AR), and a distance between the detection sensors (131) symmetrically arranged on either side is M;
wherein the charging station (2) is not in contact with the boundary of the working region (3), and the outer contour section (211) surrounds all sides of the charging station (2);
wherein a distance between the two ends of the outer contour section (211) is Y, 1/2M<Y<M, and the distance between the connecting sections (212) is greater than 1/2M.

3. The self-moving robot charging system according to claim 1 or claim 2, wherein the charging station (2) is provided with a charging interface (22) on at least one side thereof, and at least one of the connecting sections (212) is connected to the side of the charging station (2) provided with the charging interface (22) to form a guiding section (213), the length of the self-moving robot is L, and the length of the guiding section (213) is not less than L.

4. The self-moving robot charging system according to claim 3, wherein the charging station (2) is provided with the charging interface (22) on one side thereof, and the connecting section (212) connected to the charging station (2) forms the guiding section (213), and the detection sensor (131) and the control module (15) are further configured to control the self-moving robot (1) to move in the direction toward the guiding section (213) after the self-moving robot (1) is controlled to contact the charging station guideline (21).

5. The self-moving robot charging system according to claim 4, wherein the length of the guiding section (213) is 2L, and the distance between the outer contour section (211) and the charging station (2) is not greater than 2L.

6. A charging method for a self-moving robot as part of the self-moving robot charging system of any preceding claim, comprising the steps of:
drive the self-moving robot (1) to move from the current position to the direction of the charging station (2);
after the self-moving robot moves to the charging station guideline (21), the detection sensor (131) detects and identifies the charging station guideline (21);
the self-moving robot (1) moves along the path of the charging station guideline (21), and the charging connection structure (142) is aligned and connected to the charging station (2).

## Patentansprüche

1. Ein Selbstbewegungsroboter-Ladesystem, das einen Selbstbewegungsroboter (1) und eine Ladestation (2), die an einem Rand einer Arbeitsregion (3) des Selbstbewegungsroboters (1) eingerichtet ist, beinhaltet, wobei eine Seite der Ladestation (2) mit der Abgrenzung der Arbeitsregion (3) in Kontakt steht, wobei der Selbstbewegungsroboter (1) mit einer Ladeverbindungsstruktur (142), die mit der Ladestation (2) zusammenpasst, und mit mindestens zwei Detektionssensoren (131) versehen ist, wobei:
das Selbstbewegungsroboter-Ladesystem ferner eine Ladestation-Leitlinie (21) bildet, die mit der Ladestation (2) elektrisch verbunden ist und über die elektrische Verbindung mit der Ladestation (2) eine geschlossene Schleife bildet, wobei die geschlossene Schleife eine erste Region (B) definiert, wobei die erste Region (B) in der Arbeitsregion (3) liegt und kleiner als diese ist und die Ladestation (2) mindestens teilweise umgibt;
wobei die Ladestation-Leitlinie (21) einen äußeren Konturabschnitt (211) und zwei verbindende Abschnitte (212) beinhaltet, wobei der äußere Konturabschnitt (211) in Form eines durchgehenden Liniensegments mit einer Öffnung vorliegt und der äußere Konturabschnitt (211) mindestens eine Seite der Ladestation (2) umgibt, die zu der Arbeitsregion (3) hin exponiert ist und mit der Abgrenzung der Arbeitsregion (3) nicht in Kontakt steht, und wobei zwei Endpunkte des äußeren Konturabschnitts (211) jeweils über einen der Verbindungsabschnitte (212) mit der Ladestation (2) verbunden sind und wobei der äußere Konturabschnitt (211) und die Verbindungsabschnitte (212) zusammen die erste Region (B) umgeben und definieren;
der Selbstbewegungsroboter (1) eine Breite W aufweist und ferner ein Steuerungsmodul (15) beinhaltet, das mit einem Positionierungssystem versehen ist, und wobei das Steuerungsmodul (15) mindestens dazu konfiguriert ist, den Selbstbewegungsroboter (1) zu steuern, um ihn anhand des Positionierungssystems in Richtung der Ladestation-Leitlinie (21) zu bewegen, und wobei die Detektionssensoren (131) dazu konfiguriert sind, das von der Ladestation-Leitlinie (21) gesendete Signal zu detektieren und zu identifizieren, wobei mindestens einer der Detektionssensoren (131) auf einer Seite einer Mittelachse (AR) des Selbstbewegungsroboters (1) in der Breitenrichtung angeordnet ist und mindestens ein anderer der Detektionssensoren (131) symmetrisch auf der entgegengesetzten Seite der Mittelachse (AR) angeordnet ist, und wobei eine zwischen den Detektionssensoren (131) beidseitig symmetrisch angeordnete Distanz M beträgt;
wobei eine Distanz zwischen den zwei Enden des äußeren Konturabschnitts (211) und der Abgrenzung der Arbeitsregion (3) X beträgt, wobei 1/2 W < X < 1/2(W + M), und eine Distanz zwischen dem Verbindungsabschnitt (212) und der Abgrenzung der Arbeitsregion (3) größer als 1/2 W ist.

2. Ein Selbstbewegungsroboter-Ladesystem, das einen Selbstbewegungsroboter (1) und eine Ladestation (2), die in einer Arbeitsregion (3) des Selbstbewegungsroboters (1) eingerichtet ist, beinhaltet, wobei der Selbstbewegungsroboter (1) mit einer Ladeverbindungsstruktur (142), die mit der Ladestation (2) zusammenpasst, und mit mindestens zwei Detektionssensoren (131) versehen ist, wobei:
das Selbstbewegungsroboter-Ladesystem ferner eine Ladestation-Leitlinie (21) bildet, die mit der Ladestation (2) elektrisch verbunden ist und über die elektrische Verbindung mit der Ladestation (2) eine geschlossene Schleife bildet, wobei die geschlossene Schleife eine erste Region (B) definiert, wobei die erste Region (B) in der Arbeitsregion (3) angeordnet ist und kleiner als die Arbeitsregion (3) ist und die Ladestation (2) mindestens teilweise umgibt; wobei die Ladestation-Leitlinie (21) einen äußeren Konturabschnitt (211) und zwei verbindende Abschnitte (212) beinhaltet, wobei der äußere Konturabschnitt (211) in Form eines durchgehenden Liniensegments mit einer Öffnung vorliegt und der äußere Konturabschnitt (211) mindestens eine Seite der Ladestation (2) umgibt, die zu der Arbeitsregion hin exponiert ist, und wobei zwei Endpunkte des äußeren Konturabschnitts (211) jeweils über einen der Verbindungsabschnitte (212) mit der Ladestation (2) verbunden sind und wobei der äußere Konturabschnitt (211) und die Verbindungsabschnitte (212) zusammen die erste Region (B) umgeben und definieren;
der Selbstbewegungsroboter (1) eine Breite W aufweist und ferner ein Steuerungsmodul (15) beinhaltet, das mit einem Positionierungssystem versehen ist, und wobei das Steuerungsmodul (15) mindestens dazu konfiguriert ist, den Selbstbewegungsroboter (1) zu steuern, um ihn anhand des Positionierungssystems in Richtung der Ladestation-Leitlinie (21) zu bewegen, und wobei die Detektionssensoren (131) dazu konfiguriert sind, das von der Ladestation-Leitlinie (21) gesendete Signal zu detektieren und zu identifizieren, wobei mindestens einer der Detektionssensoren (131) auf einer Seite einer Mittelachse (AR) des Selbstbewegungsroboters (1) in der Breitenrichtung angeordnet ist und mindestens ein anderer der Detektionssensoren (131) symmetrisch auf der entgegengesetzten Seite der Mittelachse (AR) angeordnet ist, und wobei eine zwischen den Detektionssensoren (131) beidseitig symmetrisch angeordnete Distanz M beträgt;
wobei die Ladestation (2) nicht mit der Abgrenzung der Arbeitsregion (3) in Kontakt steht und der äußere Konturabschnitt (211) alle Seiten der Ladestation (2) umgibt;
wobei eine Distanz zwischen den zwei Enden des äußeren Konturabschnitts (211) Y, 1/2 M < Y < M, beträgt, und die Distanz zwischen den Verbindungsabschnitten (212) größer als 1/2 M ist.

3. Selbstbewegungsroboter-Ladesystem gemäß Anspruch 1 oder Anspruch 2, wobei die Ladestation (2) auf mindestens einer Seite von dieser mit einer Ladeschnittstelle (22) versehen ist und mindestens einer der Verbindungsabschnitte (212) mit der Seite der Ladestation (2), die mit der Ladeschnittstelle (22) versehen ist, verbunden ist, um einen Führungsabschnitt (213) zu bilden, wobei die Länge des Selbstbewegungsroboters L beträgt und die Länge des Führungsabschnitts (213) nicht kleiner als L ist.

4. Selbstbewegungsroboter-Ladesystem gemäß Anspruch 3, wobei die Ladestation (2) auf einer Seite von dieser mit der Ladeschnittstelle (22) versehen ist und der Verbindungsabschnitt (212), der mit der Ladestation (2) verbunden ist, den Führungsabschnitt (213) bildet, und wobei der Detektionssensor (131) und das Steuerungsmodul (15) ferner dazu konfiguriert sind, den Selbstbewegungsroboter (1) zu steuern, um ihn in Richtung des Führungsabschnitts (213) zu bewegen, nachdem der Selbstbewegungsroboter (1) gesteuert wird, um die Ladestation-Leitlinie (21) zu kontaktieren.

5. Selbstbewegungsroboter-Ladesystem gemäß Anspruch 4, wobei die Länge des Führungsabschnitts (213) 2L beträgt und die Distanz zwischen dem äußeren Konturabschnitt (211) und der Ladestation (2) nicht größer als 2L ist.

6. Ein Ladeverfahren für einen Selbstbewegungsroboter als Teil des Selbstbewegungsroboter-Ladesystems gemäß einem vorhergehenden Anspruch, das die folgenden Schritte beinhaltet:
Antreiben des Selbstbewegungsroboters (1), um ihn von der aktuellen Position in die Richtung der Ladestation (2) zu bewegen;
nachdem sich der Selbstbewegungsroboter zur Ladestation-Leitlinie (21) bewegt hat, detektiert und identifiziert der Detektionssensor (131) die Ladestation-Leitlinie (21);
der Selbstbewegungsroboter (1) bewegt sich entlang des Pfads der Ladestation-Leitlinie (21) und die Ladeverbindungsstruktur (142) wird mit der Ladestation (2) ausgerichtet und verbunden.

## Revendications

1. Un système de recharge de robot automoteur, comprenant un robot automoteur (1) et une borne de recharge (2) placée au niveau d'un bord d'une région de travail (3) du robot automoteur (1) avec un côté de la borne de recharge (2) en contact avec la limite de la région de travail (3), le robot automoteur (1) étant pourvu d'une structure de connexion de recharge (142) adaptée à la borne de recharge (2), et d'au moins deux capteurs de détection (131),
le système de recharge de robot automoteur comprenant en outre une ligne de guidage de borne de recharge (21) connectée électriquement à la borne de recharge (2) et formant une boucle fermée via la connexion électrique avec la borne de recharge (2), la boucle fermée délimitant une première région (B), la première région (B) étant située dans la région de travail (3) et étant plus petite qu'elle et entourant au moins partiellement la borne de recharge (2) ; la ligne de guidage de borne de recharge (21) comprenant une section de contour externe (211) et deux sections de connexion (212), la section de contour externe (211) étant sous la forme d'un segment de ligne continue avec une ouverture, et la section de contour externe (211) entourant au moins un côté de la borne de recharge (2) qui est exposé à la région de travail (3) et n'est pas en contact avec la limite de la région de travail (3), et deux points d'extrémité de la section de contour externe (211) étant connectés respectivement à la borne de recharge (2) au moyen de l'une des sections de connexion (212), et la section de contour externe (211) et les sections de connexion (212) entourant et délimitant ensemble la première région (B) ;
dans lequel le robot automoteur (1) présente une largeur W et comprend en outre un module de commande (15) pourvu d'un système de positionnement, et le module de commande (15) est au moins configuré pour commander le robot automoteur (1) afin qu'il se déplace en direction de la ligne de guidage de borne de recharge (21) au moyen du système de positionnement, et les capteurs de détection (131) sont configurés pour détecter et identifier le signal envoyé par la ligne de guidage de borne de recharge (21), au moins un des capteurs de détection (131) étant agencé d'un côté d'un axe central (AR) du robot automoteur (1) dans la direction de la largeur, et au moins un autre des capteurs de détection (131) étant agencé symétriquement du côté opposé de l'axe central (AR), et une distance entre les capteurs de détection (131) agencés symétriquement de chaque côté étant M ;
dans lequel une distance entre les deux extrémités de la section de contour externe (211) et la limite de la région de travail (3) est X, où ½W < X < ½(W + M), et une distance entre la section de connexion (212) et la limite de la région de travail (3) est supérieure à ½W.

2. Un système de recharge de robot automoteur, comprenant un robot automoteur (1) et une borne de recharge (2) placée dans une région de travail (3) du robot automoteur (1), le robot automoteur (1) étant pourvu d'une structure de connexion de recharge (142) adaptée à la borne de recharge (2), et d'au moins deux capteurs de détection (131),
le système de recharge de robot automoteur comprenant en outre une ligne de guidage de borne de recharge (21) connectée électriquement à la borne de recharge (2) et formant une boucle fermée via la connexion électrique avec la borne de recharge (2), la boucle fermée délimitant une première région (B), la première région (B) étant située dans la région de travail (3) et étant plus petite que la région de travail (3) et entourant au moins partiellement la borne de recharge (2) ; la ligne de guidage de borne de recharge (21) comprenant une section de contour externe (211) et deux sections de connexion (212), la section de contour externe (211) étant sous la forme d'un segment de ligne continue avec une ouverture, et la section de contour externe (211) entourant au moins un côté de la borne de recharge (2) exposé à la région de travail, et deux points d'extrémité de la section de contour externe (211) étant connectés respectivement à la borne de recharge (2) au moyen de l'une des sections de connexion (212), et la section de contour externe (211) et les sections de connexion (212) entourant et délimitant ensemble la première région (B) ;
dans lequel le robot automoteur (1) présente une largeur W et comprend en outre un module de commande (15) pourvu d'un système de positionnement, et le module de commande (15) est au moins configuré pour commander le robot automoteur (1) afin qu'il se déplace en direction de la ligne de guidage de borne de recharge (21) au moyen du système de positionnement, et les capteurs de détection (131) sont configurés pour détecter et identifier le signal envoyé par la ligne de guidage de borne de recharge (21), au moins un des capteurs de détection (131) étant agencé d'un côté d'un axe central (AR) du robot automoteur (1) dans la direction de la largeur, et au moins un autre des capteurs de détection (131) étant agencé symétriquement du côté opposé de l'axe central (AR), et une distance entre les capteurs de détection (131) agencés symétriquement de chaque côté étant M ;
dans lequel la borne de recharge (2) n'est pas en contact avec la limite de la région de travail (3), et la section de contour externe (211) entoure tous les côtés de la borne de recharge (2) ;
dans lequel une distance entre les deux extrémités de la section de contour externe (211) est Y, ½M < Y < M, et la distance entre les sections de connexion (212) est supérieure à ½M.

3. Le système de recharge de robot automoteur selon la revendication 1 ou la revendication 2, dans lequel la borne de recharge (2) est pourvue d'une interface de recharge (22) sur au moins un côté de celle-ci, et au moins une des sections de connexion (212) est connectée au côté de la borne de recharge (2) pourvu de l'interface de recharge (22) pour former une section de guidage (213), la longueur du robot automoteur est L, et la longueur de la section de guidage (213) n'est pas inférieure à L.

4. Le système de recharge de robot automoteur selon la revendication 3, dans lequel la borne de recharge (2) est pourvue de l'interface de recharge (22) sur un côté de celle-ci, et la section de connexion (212) connectée à la borne de recharge (2) forme la section de guidage (213), et le capteur de détection (131) et le module de commande (15) sont en outre configurés pour commander le robot automoteur (1) afin qu'il se déplace en direction de la section de guidage (213) après que le robot automoteur (1) a été commandé afin d'entrer en contact avec la ligne de guidage de borne de recharge (21).

5. Le système de recharge de robot automoteur selon la revendication 4, dans lequel la longueur de la section de guidage (213) est 2L, et la distance entre la section de contour externe (211) et la borne de recharge (2) n'est pas supérieure à 2L.

6. Un procédé de recharge pour un robot automoteur faisant partie du système de recharge de robot automoteur de n'importe quelle revendication précédente, comprenant les étapes suivantes :
pilotage du robot automoteur (1) afin qu'il se déplace à partir de la position actuelle en direction de la borne de recharge (2) ;
après que le robot automoteur s'est déplacé jusqu'à la ligne de guidage de borne de recharge (21), le capteur de détection (131) détecte et identifie la ligne de guidage de borne de recharge (21) ;
le robot automoteur (1) se déplace le long du trajet de la ligne de guidage de borne de recharge (21), et la structure de connexion de recharge (142) est alignée avec la borne de recharge (2) et lui est connectée.
